# EUROPEAN PATENT APPLICATION

(11) **EP 3 095 317 A1**
(43) Date of publication of application: **23.11.2016**
(21) Application number: 15737853.0
(22) Date of filing: 14.01.2015
(51) Int. Cl.: A01G 9/02, A01G 1/00

(54) **PLANTING UNIT AND PLANTER**

(30) Priority: 15.01.2014 JP 2014005471
(71) Applicant: Suntory Holdings Limited, Osaka-shi, Osaka 530-8203 (JP)
(72) Inventor: HASHIMOTO Masaki, Tokyo 107-8631 (JP)
(74) Representative: Vossius & Partner Patentanwälte Rechtsanwälte mbB
(86) International application number: PCT/JP2015/050737
(87) International publication number: WO 2015/108053

(57) **Abstract**

A planting unit which allows combing a plurality thereof to realize a low-cost planter of a desired configuration and a planter comprised of such planting units are provided. The planting unit 10 to constitute the planter comprises a housing 11 having a mounting space for placing a planting bed material 30 therein, a water reservoir portion capable of reserving planting water for the planting bed material 30 mounted in the mounting space, and a front face opening portion 13 allowing exposure therethrough of the planting bed material 30 mounted in the mounting space. At an upper portion of the housing 11, a water feeding portion 14 capable of feeding water to the water reservoir portion can be formed. At a lower portion of the housing 11, a water discharging portion 15 capable of discharging the water in the water reservoir portion can be formed. On each of left and right side portions of the housing 11, there can be formed a communication portion 17 allowing communication between the water reservoir portion of this planting unit 10 and a water reservoir portion of another planting unit 10 disposed on left or right adjacent side of the planting unit 10 as viewed in a front view.

## Description

### Technical Field

This disclosure relates to a planting unit for plants for greening of a wall face disposed generally perpendicularly and a planter constituted of such planting unit.

### Background Art

As a prior-art document information relating to a planter of the above-noted type, there is Patent Document 1 identified below. According to this Patent Document 1, between a front plate having a square shape as viewed in a front view and a back plate having a similar shape, a water-retentive base is clamped and fixed thereto with bolts, nuts, or the like. At a plurality of portions of the front plate, there are provided planting rack portions which are opened obliquely upward, thus providing a planting container. As this is mounted to a wall face by means of e.g. a wire, the planting container can be used as a planter for wall face greening.

### Prior-Art Document

### Patent Document

Patent Document 1: Japanese Unexamined Patent Application No. 2010-239878

### Summary

### Problem to be Solved by Disclosure

However, the planter disclosed in Patent Document 1 has a complicated arrangement of clamping and fixing the water-retentive base between the front plate and the back plate with bolts, nuts or the like. And, it is necessary to design its size individually, depending on a user's demand or place of its installment. Thus, reduction of its manufacturing cost would be difficult and change of the configuration of the planter after its fabrication would also be difficult.

Further, the above planter is configured as follows. Namely, water is caused to flow through a hose disposed along a longitudinal direction upwardly of an upper end portion of the water-retentive base, and this water is caused to drop through a plurality of holes formed in the hose along the longitudinal direction thereof and spaced apart from each other, so that this water is fed to plants. Excess amount of water discharged from a lower end of the water-retentive base is drawn by a pump for circulation. Therefore, if the planter has a large size in the lateral direction in particular, a hose having a correspondingly long length will become necessary, leading to increase of piping resistance, whereby a pump having a high lifting height will be needed.

### Solution

The invention has been made in view of the above-described state of the art and its object is to provide a planting unit which allows combing a plurality thereof to realize a low-cost planter of a desired configuration and a planter comprised of such planting units.

According to a first characterizing feature of a planting unit relating to the present invention, the planting unit comprises a housing having a mounting space for placing a planting bed material therein and a water reservoir portion capable of reserving planting water for the planting bed material mounted in the mounting space, and a front opening portion allowing exposure therethrough of the planting bed material mounted in the mounting space;
wherein at an upper portion of the housing, a water feeding portion capable of feeding water to the reservoir portion can be formed;
at a lower portion of the housing, a water discharging portion capable of discharging the water in the water reservoir portion can be formed; and
on each of left and right side portions of the housing, there can be formed a communication portion allowing communication between the water reservoir portion of this planting unit and a water reservoir portion of another planting unit disposed on left or right adjacent side of the planting unit as viewed in a front view.

When a water feeding portion for feeding planting water to the water reservoir portion is needed, such water feeding portion can be formed. When a water discharging portion for discharging planting water in the water reservoir portion is needed, such water discharging portion can be formed. When a communication portion allowing communication to a water reservoir portion of another planting unit which is disposed on left or right adjacent side of the planting unit as viewed in a front view, such communication portion can be formed. As presence or absence of each one of the water feeding portion, the water discharging portion and the communication portion can be set later as desired for each planting unit, manufacturing cost reduction is possible by manufacturing a large number of planting units of a same configuration at the time of manufacture.

And, when a large planter is formed by disposing a plurality of such planting units side by side along desired upper/lower, left/right directions, planting water in water reservoir portion of the upper planting unit displaced adjacent in the vertical direction will be discharged downward from the water discharging portion of this upper planting unit to be fed to the water feeding portion of the lower planting unit. Similarly, between planting units disposed side by side in the left/right direction, planting water in a water reservoir portion of one planting unit is fed to the other planting unit via the communication portions allowing communication to each other. Accordingly, there is no need to install a water feeding pipe and a water discharging pipe for each individual planting units that together constitute the planter. Consequently, a planter having a desired configuration can be realized at low costs.

According to a second characterizing feature, the communication portion respectively has a base end side connected to a lateral face portion of the housing and also has a pipe joint on the other end side, the communication portion being comprised of a pair of pipes whose axes are disposed along a horizontal direction and at a same height; and
the pipe joint is connectable to another pipe joint provided in the communication portion of the other planting unit disposed adjacent on the left or right side.

As the communication portion respectively has a base end side connected to a lateral face portion of the housing and also has a pipe joint on the other end side, this connection portion can be connected to a communication portion of the other planting unit easily and reliably. Some preferred examples of the pipe joint include such joints as an insertion joint, a screw joint, a flange joint.

According to a third characterizing feature, a water guiding portion is formed in at least one of the pair of pipes.

The planting units disposed adjacently in the left/right direction are communicated to each other via the communication portions. Even if planting water should leak to the outside through a broken part formed if any in the communication portion, it is possible to guide this leaking planting water from the other end side to the base end side, via the water guiding portion formed in at least one of the pair of pipes.

According to a fourth characterizing feature, the water guiding portion includes a rib provided at a lower portion of an outer circumference of the pipe, the rib being raised and extending along the axis from the other end side to the base end side; and
the rib has, a lower end portion thereof, an inclined portion inclined downward from the other end side to the base end side.

Since a lower end portion of the rib has an inclined portion inclined downward from the other end side to the base end side, even if planting water should leak to the outside through a broken part formed if any in the communication portion, this leaking planting water can be guided smoothly by the inclined portion and guided eventually via this rib to the base end side. Moreover, this rib serves also for reinforcement of the pipe.

According to a fifth characterizing feature, the housing has a top face opening portion in a top face thereof, the top face opening portion constituting the water feeding portion.

When a plurality of planting units are disposed adjacently in a plurality of stages in the vertical direction, discharged water from the water discharging portion of an upper planting unit can be received through the top face opening portion of a lower planting unit, and the top face opening portion receiving this discharged water constitutes the water feeding portion.

According to a sixth characterizing feature, the top face opening portion is capable of accommodating and mounting a lower end portion of another planting unit disposed adjacently upward.

When a plurality of planting units are disposed adjacently in a plurality of stages in the vertical direction, a lower end portion of the upper planting unit can be mounted reliably within the top end opening portion of the lower planting unit.

According to a seventh characterizing feature, the top end opening portion can be covered by a lid member having a water feeding mouth capable of feeding water to the water feeding portion.

By covering the top face opening portion of the lid member of the planting unit by a lid member, it is possible to prevent intrusion of dust to the interior of the housing through the top face opening portion and to reduce evaporation of planting water through the top face opening portion to the outside of the housing. As a water feeding mouth of the lid member is capable of feeding water to the water feeding portion, planting water can be fed to the water reservoir portion of the planting unit when needed even when the top face opening portion is covered by the lid member.

According to an eighth characterizing feature, the water discharging portion comprises an overflow pipe capable of discharging water by allowing overflow of planting water over a predetermined discharge water level; and
the predetermined discharge water level is set near a maximum height of the communication portion.

If a discharge water level of the overflow pipe as a predetermined discharge water level is set too low, a reserved amount of planting water reserved in the water reservoir portion will be reduced, so that there will be possibility of failure to secure an amount of planting water sufficient for growth of plant in the planting bed material. Conversely, if the discharge water level of the overflow pipe is set too high, there will be possibility of root rot of the plant in the planting bed material.

Then, by setting the discharge water level of the overflow pipe near a maximum height of the communication portion, it becomes possible to reserve an appropriate amount of planting water in the water reservoir portion, while allowing smooth passage of planting water through effective utilization of the openings of the communication portions between the planting units disposed adjacently in the left/right direction. Consequently, it becomes possible to avoid adverse effect to the plant due to insufficient or excessive feeding of planting water described above.

According to a ninth characterizing feature, in the housing, at least the water discharging portion and the communication portion are formed integrally, and the water discharging portion and the communication portion are formed under a closed state not permitting passage of the planting water.

The manufacturing cost of the planting unit can be reduced at the time of manufacture, by manufacturing a greater number of planting units of a same configuration. When a plurality thereof are combined to constitute a planter, the water discharging portion and/or the communication portion are/is rendered water-passable by post-fabrication work thereon, depending on a disposing location of the planter. So that, a planter having a high degree of freedom in regard to its configuration or disposing location can be realized.

According to a tenth characterizing feature, the housing includes, downwardly of the opening portion, a water level window allowing visual recognition of a water level of the planting water reserved in the water reservoir portion.

Visual recognition of the reserved amount of planting water is made possible even from the outside the planting unit.

According to an eleventh characterizing feature, the housing includes an interconnecting portion for interconnecting the planter unit and another planter unit disposed on left or right adjacent side of the planting unit as viewed in a front view.

When a plurality of planting units are disposed adjacently, at least planting units adjacent each other in the left/right direction as viewed in the front view can be interconnected via the interconnecting portions. With such interconnection, there arises no possibility of inadvertent release of connection of the pipe joint of the communication portion, so that the interconnected planting units can be handled together as one.

According to a characterizing feature of a planter relating to the present invention, a planter includes a plurality of the planter units having any one of the above-described first through eleventh characterizing features disposed adjacently in a left/right direction and also adjacently in one or more stages in a vertical direction, as viewed in a front view;
wherein of the planting units disposed in each stage, planting water is fed from the water feeding portion of a predetermined planting unit to the water reservoir portion of this planting unit;
the respective planting units disposed in the respective stage share planting water via the mutually communicated communication portion of the other planting units disposed adjacently respectively; and
the planting water is discharged through the water discharging portion from the water reservoir portion of a predetermined planting unit of a group of planting units disposed in the each stage.

As the above arrangement is formed by disposing a plurality of planting units adjacently in the vertical and left/right directions, a planter of a desired configuration can be provided far less costly than a conventional planter which is designed individually. Further, post-fabrication change of the configuration is also made possible for each planter unit.

Possibility or impossibility of water passage from or to the outside of planting water in the vertical and left/right directions can be set for each planting unit. Thus, when a large planter is to be formed by combining a plurality of units, the planter as a whole can be provided with a single water feeding portion and a single water discharging portion. The planting unit per se functions as a planting water feeding means for another planting unit disposed on the downstream side. So, there is no need to separately provide a hose or pipe for feeding planting water to each planting unit. Hence, there is no need to change the pump due to increase of pipe resistance resulting from a size change of the planter at least in the left/right direction.

### Effect of the Invention

As described above, with the present invention, it has become possible to provide a planting unit which allows combing a plurality thereof to realize a low-cost planter of a desired configuration and a planter comprised of such planting units.

### Brief Description of the Drawings

[Fig. 1] are explanatory views of a planting unit relating to the present invention, with (a) being a perspective view including a front face, (b) being a perspective view including a rear face,
[Fig. 2] is a schematic view of the planting unit,
[Fig. 3] is a front view of a housing included in the planting unit,
[Fig. 4] is a rear view of the housing included in the planting unit,
[Fig. 5] is a right side view of the housing included in the planting unit,
[Fig. 6] are explanatory views of the the lid member included in the planting unit, with (a) being a plan view, (b) being a section view taken along a line VIb-VIb in the plan view,
[Fig. 7] are explanatory views of the the housing included in the planting unit, with (a) being a section view, (b) being an end view taken along a line VIIb-VIIb in the section view,
[Fig. 8] is a schematic view of a planter relating to the present invention,
[Fig. 9] is an explanatory view of the planter relating to the present invention.

### Embodiments

Next, embodiments of the present invention will be explained with reference to the accompanying drawings.

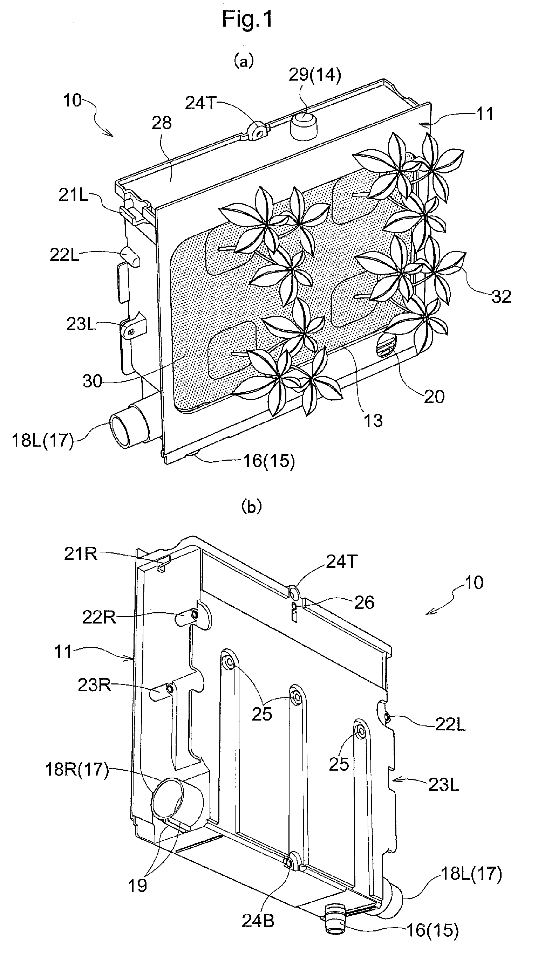

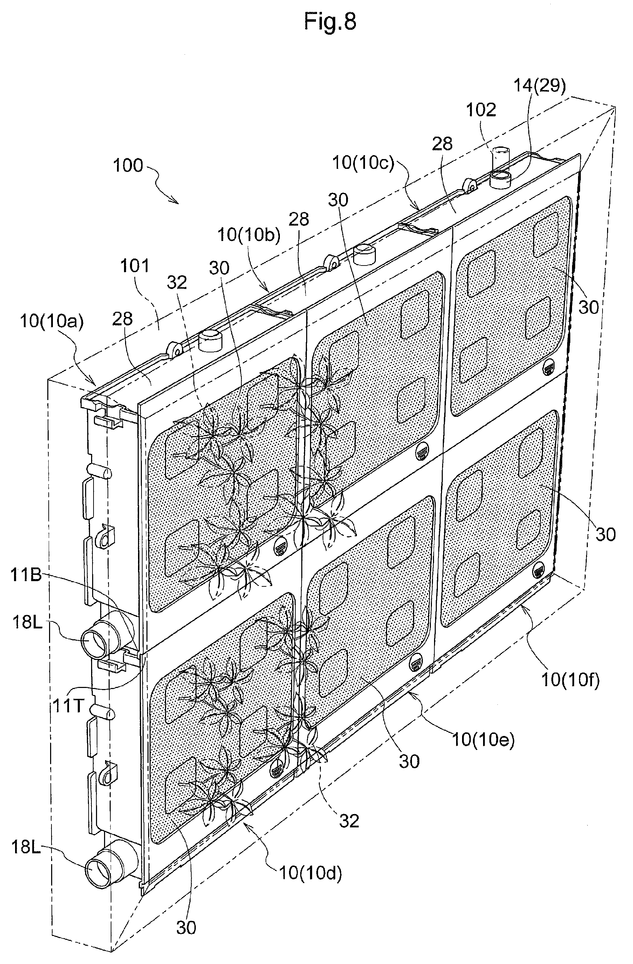

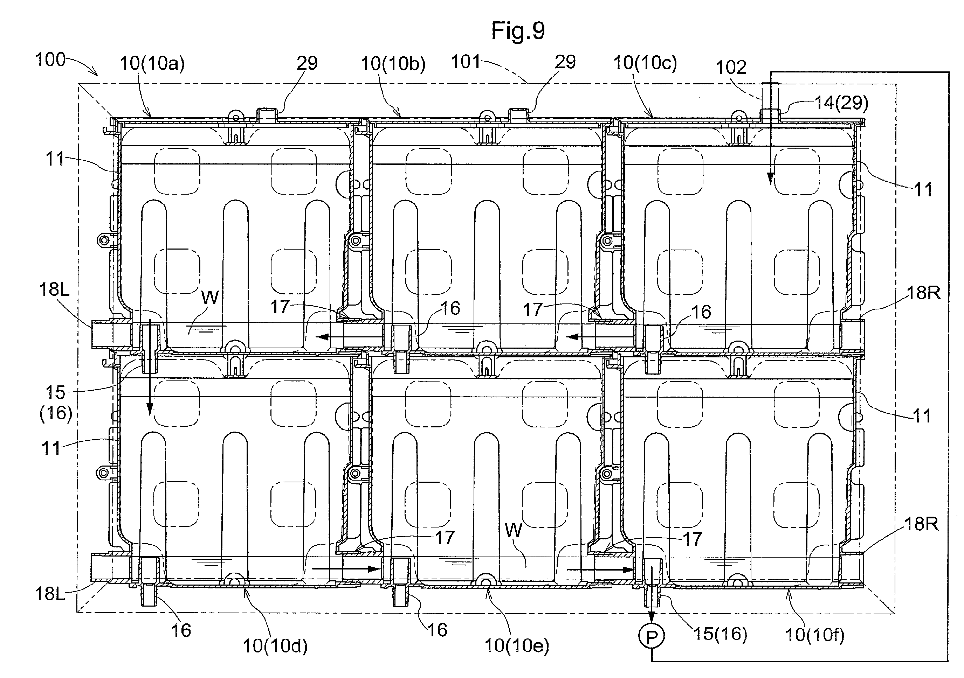

Fig. 1 shows a state in which a planting bed material 30 is accommodated within a planting unit 10 and plants 32 are planted in this planting bed material 30. The planting unit 10, when a plurality thereof are combined and assembled together in vertical and left/right directions as viewed in a front view (for instance, six in total consisting of three columns in the left/right direction and two stages in the vertical direction as shown in Fig. 8 and Fig. 9) constitute a planter 100. This planter 100, as mounted to a part or all of an inner or outer wall of a building, is used for greening.

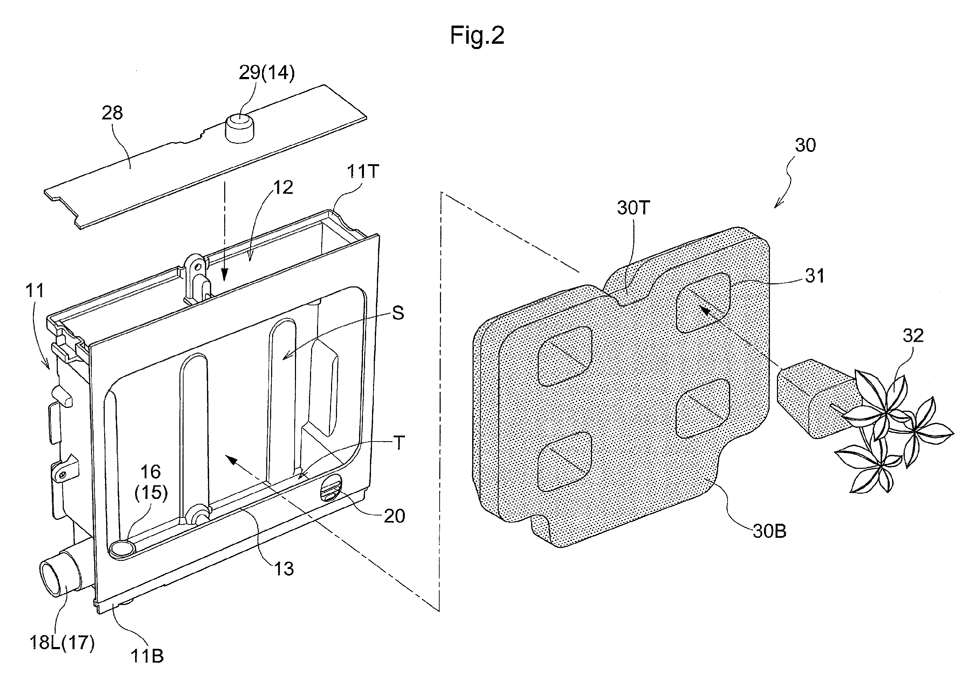

As shown in Figs. 2-5, the housing 11 is configured such that a front face portion and a rear face portion thereof are formed in an approximately squire shape as viewed in the front view. More particularly, there is provided as a bottomed box-like housing 11 set such that relative to its height and width, its depth, i.e. the width respectively of the bottom face portion and the lateral face portion thereof, is set to be a fraction of (e.g. ranging from 1/5 to 1/3) of one side of the front face portion and the rear face portion.

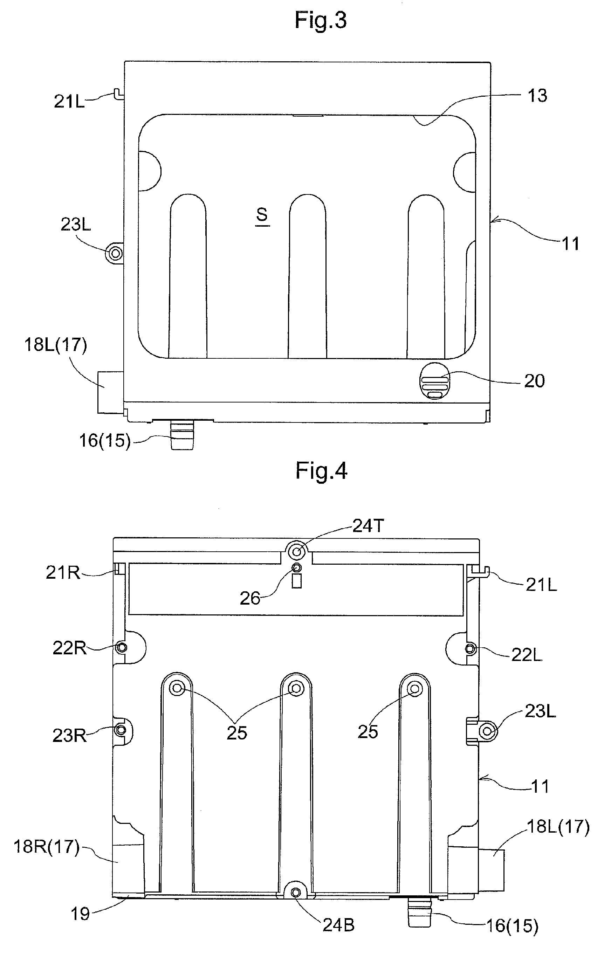

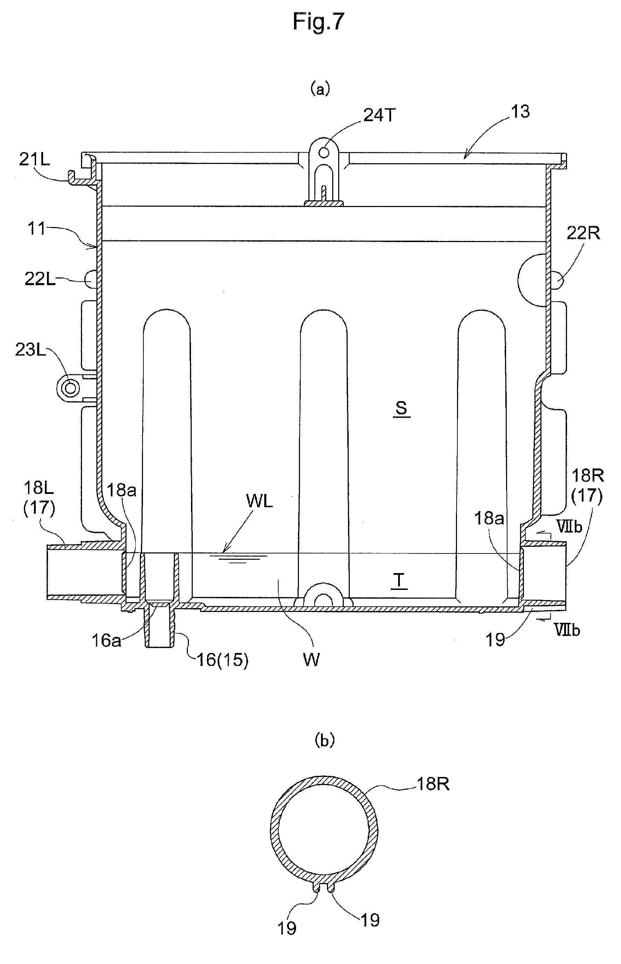

The inside space of the housing 11 functions as a mounting space S in which the planting bed material 30 can be mounted. In the front face portion of the housing 11, there is provided a front face opening portion 13 as an example of an opening portion capable of exposing the planting bed material 30 mounted in the mounting space S in the front face portion (see Fig. 2, Fig. 3). The inside space portion of the housing 11 lower than a lower edge portion of the front face opening portion 13 can function also as a water reservoir portion T capable of reserving an amount of planting water W fed from a water feeding portion 14 or the like for the planting bed material 30 mounted in the mounting space S (see Fig. 7).

In a top face portion of the housing 11, a top face opening portion 12 is provided and this top face opening portion 12 can be closed (covered) by a lid member 28 (see Fig. 2). In a bottom face portion of the housing 11, an overflow pipe 16 is provided (see Figs. 2-5). And, on left and right lateral face portions of the housing 11, there are provided pipes 18R, 18L respectively (see Figs. 1-5). And, in the lateral face portions and the rear face portion of the housing 11, there are provided interconnecting portions 23R, 23L and 24T, 24B, etc. (see Figs. 1-5) for interconnecting planting units disposed adjacently in the vertical and left/right directions.

The housing 11 is injection-molded of ABS resin to form integrally the front face opening portion 13, the top face opening portion 12, the overflow pipe 16, the pipes 18R, 18L, the interconnecting portions 23R, 23L and 24T, 24B, etc. Incidentally, the configuration of the housing 11 is not limited to the one formed by injection-molding of injection molding of thermoplastic resin such as ABS resin, vinyl chloride, PET, acryl, etc., but can be molded through machining, welding, etc. of a metal material such as aluminum, stainless steel, etc.

The pipe 18R, 18L respectively has a base end side connected to a left/right lateral face portion of the housing 11 as viewed in the front view and also has a pipe joint on the other end side. And, axes thereof are disposed along a horizontal direction and at a same height. In the instant embodiment, as shown in Fig. 7 (a), of the pipes 18R, 18L, the pipe 18L is a male type insertion joint and the pipe 18R is a female type insertion joint. Incidentally, in the pipe joint, alternatively, the pipe 18L can be provided as a female type insertion joint and the pipe 18R can be provided as male type insertion joint. Further, the pipe joints are not limited to the insertion joints, but can be any known type of pipe joints such as flange joints having a flange in both the pipe 18R, 18L.

As shown in Fig. 9, when the planting units 10 are disposed adjacently in the left/right direction as viewed in the front view, to the pipe 18R of the left planting unit 10, the pipe 18L of the right planting unit is inserted and the two pipes 18R, 18L constitute a communication portion 17 for establishing communication between the respective water reservoir portions T.

As shown in Fig. 7 (a) and Fig. 7 (b), from the other end side to the base end side at a lower portion of the outer circumference of the pipe 18R, two pieces of ribs 19 extend as projections in parallel and spaced apart from each other along the axis. A lower end portion of each rib 19 is inclined downward from the other end side to the base end side. Namely, in the instant embodiment, the entire lower end portion of the rib 19 constitutes an "inclined portion" inclined downwards from the other end side to the base end side. Incidentally, the inclined portion is not limited to the one formed entirely at the lower end portion of the rib 19, but can be formed only for a predetermined distance from the other end side to the base end side or can have its angle of inclination varying at a mid portion thereof. The pipe 18L is reinforced by the respective rib 19.

Since the lower end portion of each rib 19 is inclined downward from the other end side to the base end side of the pipe 18R constituting the communication portion 17, even if planting water W should leak to the outside of the housing 11 through a broken part formed if any in the communication portion 17, this leaking planting water W can be guided smoothly via the respective rib 19 toward the left planting unit 10. Namely, in the instant embodiment, the rib 19 constitutes a "water guiding portion" for guiding planting water leaked to the outside of the communication portion 17 from the other end side toward the base end side.

If another planting unit 10 is disposed adjacently on the lower side of the left planting unit 10, the planting water W guided via the ribs 19 will be discharged to this lower further planting unit 10. Thus, for the planter 100 constituted of these planting units 10, leakage of the planting water W to the outside can be prevented. For instance, even if the planting water W should leak through a broken part in the communication portion 17 between the planting unit 10 (10a) and the planting unit 10 (10b) shown in Fig. 9, this planting water W will be guided via the ribs 19 provided in the pipe 18R of the planting unit 10 (10a) eventually to the planting unit 10 (10d).

Incidentally, for improvement of the guiding function of leaked planting water W toward the base end side, it is preferred that at least the end face on the other end side of the pipe 18L and/or the material surface of the rib 19 be coated with a substance for reducing the surface tension such as alcohol, a surfactant or the like or unevenness be formed in the surface by melting a portion of its ingredients for improvement of hydrophilicity. Further, as a water guiding portion, in the end face of the other end side of the pipe 18L and between the two ribs 19, a slit having a predetermined length can be formed to extend from the other end side to the base end side. Then, leaked planting water W can be guided smoothly via the slit or the inclined portion of the rib 19 formed in the pipe 18L toward the base end side of the rib 19.

As shown in Fig. 7 (a), the overflow pipe 16 is configured as a pipe which has its upper end protruding into the housing 11 and has its lower end protruding to the outside of the housing 11. The inside diameter of the overflow pipe 16 is set to have an appropriate size effective to resist clogging by particulate or fibrous foreign substance which may be contained in the planting water W.

The protruding height of the upper end of the overflow pipe 16 into the housing 11 is set to approximate the maximum height of the inside diameter of the pipe 18L constituting the communication portion 17. The protruding height becomes a predetermined discharge water level WL which is a reserved height of the planting water W in the water reservoir portion T, and an amount of the planting water W in excess of this predetermined discharge water level WL will be caused to overflow via the overflow pipe 16 to be discharged downward, so that the reserved amount of the planting water W in the water reservoir portion T will be maintained below a predetermined amount. That is, if an amount of planting water W exceeding the water retentive capacity of the planting bed material 30 or the feeding rate of the planting water W by the water feeding means exceeds a water retaining rate of the planting bed material 30, the excess planting water W will be discharged via the overflow pipe 16.

When the planting units 10 are disposed adjacently in the vertical direction, the lower end of the overflow pipe 16 of the upper planting unit 10 will be opened within the top face opening portion 12 of the lower planting unit 10, so that planting water W discharged from the upper planting unit 10 will be fed to the planting bed material 30 mounted in the mounting space S or the water reservoir portion T of the lower planting unit 10. That is, in case a plurality of planting units are disposed adjacently at least in the vertical direction, the planting water W discharged from the overflow pipe 16 can be fed as planting water W to the lower planting unit 10.

Therefore, only by feeding planting water W to the planting unit 10 which is disposed uppermost of the group of planting units disposed adjacently in the vertical direction, excess planting water W exceeding the predetermined discharge water level WL of the planting units 10 of the respective stage is discharged to the lower planting units and eventually an appropriate amount of planting water W can be fed to the planting bed materials 30 of all of the upper and lower planting units 10. Further, planting water W discharged from the overflow pipe 16 of the lowermost planting unit 10 will be collected in a water reservoir tank, which water can be used in circulation when needed as planting water W to be used by the uppermost planting unit 10.

If a discharge water level of the overflow pipe 16 as the predetermined discharge water level WL is set too low, a reserved amount of planting water W reserved in the water reservoir portion T is reduced, so that there will be possibility of failure to secure an amount of planting water W sufficient for growth of plant 32 in the planting bed material 30. Conversely, if the discharge water level of the overflow pipe 16 is set too high, there will be possibility of root rot of the plant 32 planted in the planting bed material 30.

Then, by setting the discharge water level of the planting water W by the overflow pipe 16 near the maximum height of the communication portion 17, it becomes possible to reserve an appropriate amount of planting water W in the water reservoir portion T, while allowing smooth passage of planting water W through effective utilization of the communication portions 17 between the planting units 10 disposed adjacently in the left/right direction. Consequently, it becomes possible to avoid adverse effect to the plant due to insufficient or excessive feeding of planting water W described above.

As shown in Fig. 7 (a), when the housing 11 is injection-molded, the overflow pipe 16 and the pipes 18R, 18L will be molded as kept closed by partition walls 16a, 18a. Namely, when being intact after the molding, the overflow pipe 16 will not yet function as the water discharging portion 15 and the pipes 18R, 18L will not yet function as the communication portion 17. However, with post-fabrication removal of the partition wall 16a of the overflow pipe 16, this overflow pipe 16 can now function as the water discharging portion 15 for discharging planting water W in the water reservoir portion T of the planting unit 10. Similarly, with post-fabrication removable of the partition walls 18a of the pipes 18R, 18L, the pipes 18R, 18L can now function as the communication portions 17 for establishing communication between the water reservoir portion T of this planting unit to other planting units 10 disposed adjacently in the left/right direction.

Namely, at the time of fabrication, by manufacturing a large number of planting units 10 of a same configuration, the manufacturing cost can be reduced. And, when a plurality thereof are combined to constitute the planter 100, the water discharging portion 15 and the communication portion 17 can be made water-passable by post-fabrication work, depending on a disposing location of the planter 100. Thus, So that, a planter having a high degree of freedom in regard to its configuration or disposing location can be realized.

Incidentally, the forming positions of the partition walls 16a, 18a are not limited to those shown in the drawing. The partition wall 16a can be provided at a position for closing the upper end of the overflow pipe 16 or can be provided at a position for closing the lower end of the overflow pipe 16. Similarly, the partition wall 18a can be formed on an outer end of the housing 11 of each one of the pipes 18R, 18L or can be formed on an inner end of the housing 11 of each one of the pipes 18R, 18L. Further alternatively, at the time of injection molding of the housing 11, the overflow pipe 16 and the pipes 18R, 18L can be formed open for allowing water passage in advance. Then, when it becomes necessary, the overflow pipe 16 and the pipes 18R, 18L can be closed by post-fabrication work. However, the arrangement of firstly providing the partition walls 16a, 18a a the time of molding the housing 11 and then making the overflow pipe 16 and the pipes 18R, 18L water-passable only after removal of these partition walls 16a, 18a with post-fabrication work is preferred to the arrangement of closing the overflow pipe 16 and the pipes 18R, 18L with post-fabrication work after these are firstly made water-passable at the time of molding of the housing 11, since there will be no possibility of leakage of planting water W due to e.g. such inconvenience as failure to close them with the post-fabrication work.

The housing 11 has a water level window 20 which allows visual recognition of a water lever of the planting water W reserved in the water reservoir portion T, with the window 20 being formed right-downwardly of the front face opening portion 13. In the water level window 20 and at e.g. a position corresponding to the height of the upper end of the overflow pipe 16, there is provided a horizontal straight indicator (index) for indicating e.g. a reference for the predetermined discharge water level.

Then, based on the above indicator and a water level of planting water W actually reserved in the water reservoir portion T, the reserved amount of the planting water W can be easily recognized visually even from the outside of the planting unit 10.

As shown in Fig. 2, for the sake of convenience when a plurality of planting units 10 are to be disposed adjacently in the vertical direction, at an inner circumferential portion of the top face opening portion 12, there is provided a stepped portion 11T capable of accommodating and mounting the bottom of the upper planting unit 10 and at an outer circumferential portion of the bottom of the housing 11, there is provided a stepped portion 11B slightly receded to the inner side from the outer face to be able to come into contact with the stepped portion 11T .

Then, when the planting units 10 are disposed adjacently in the vertical direction, the stepped portion 11B of the bottom of the upper planting unit 10 comes into contact with the stepped portion 11T within the top face opening portion 12 of the lower planting unit 10, whereby the stepped portion 11B of the bottom of the upper planting unit 10 is accommodated and mounted in a reliable manner within the top face opening portion 12 of the lower planting unit 10.

When the planting units 10 are disposed adjacently in a plurality of stages in the vertical direction, discharge water from the water discharging portions 15 of the upper planting units 10 can be received by the top face opening portions 12 of the lower planting units 10. In this case, the top face opening portion 12 of the housing 11 constitutes the water feeding portion 14 of this planting unit 10.

In the left and right lateral faces of the housing 11, at center portions thereof, there are provided interconnecting portions 23R, 23L for interconnecting planting units 10 disposed adjacently in the left/right direction; and at upper portions thereof, there are provided retaining portions 21R, 21L for retaining the planting units disposed adjacently in the left/right direction to each other. Further, at upper and lower portions of the back face portion of the housing 11, there are provided the interconnecting portions 24T, 24B for interconnecting the planting units 10 disposed adjacently in the vertical direction to each other.

When the planting units 10 disposed adjacently are fixed to each other with bolts, nuts or the like with placing the interconnecting portions 23R, 23L in contact with each other and also placing the interconnecting portions 24T, 24B in contact with each other, the adjacently disposed planting units 10 are connected to each other.

When a plurality of planting units 10 are disposed adjacently, at least the planting units 10 adjacent each other in the left/right direction as viewed in the front view are interconnected via the interconnecting portions 23R, 23L. Thus, there is no possibility of inadvertent release of the connection of the pipe joints of the pipes 18R, 18L constituting the communication portions 17 and the group of interconnected planting units can be handled as one altogether. Incidentally, even when the pipes 18R, 18L and the overflow pipe 16 are under the closed states, the interconnection between the adjacently disposed planting units 10 is possible. In this case, no passage of planting water W will be effected.

At positions slightly upwardly of the height-wise center of the back face portion of the housing 11, there are provided three fixing portions 25 arranged along the horizontal direction. In operation, by hooking e.g. heads of needle-like mounting means projecting from a wall face to the fixing portions 25, the planting unit 10 can be suspended from the wall face. Further, at an upper and left/right center position of the back face of the housing 11, there is provided a hooking retaining hole 26. In operation, a string or a hook inserted through this retaining hole 26 or hooking e.g. a head of a needle-like mounting means projecting from the wall face with this retaining hole 26, the planting unit 10 can be suspended from the wall face. The method of mounting the planting unit 10 to a wall face is not limited to the above. Instead, fixing can be made to an anchor bolt struck into the wall face or fixing can be made by hooking a length of wire to a picture rail or the like.

Further, in the left and right lateral face portions of the housing 11 and at positions in the height direction between the retaining portions 21R, 21L and the interconnecting portions 23R, 23L, there are provided fixing portions 22R, 22L for fixing the planting unit 10 to a frame body 101 (see Fig. 8), so that the frame body 101 to which the planting units 10 are fixed can be mounted to a wall face.

As shown in Fig. 2, the lid member 28 has an outer contour to fit the opening shape of the top face opening portion 12 and the stepped portion 11T provided therein. When the lid member 28 is to be placed to cover the top face opening portion 12, the bottom face of the lid member 28 comes into contact with the stepped portion 11T inside the top face opening portion 12 of the planting unit 10, so that the lid member 28 is accommodated and mounted in a reliable manner within the top face opening portion 12. In this way, by covering the top face opening portion 12 with the lid member 28, it is possible to prevent inadvertent intrusion of dust into the hosing 11 through the top face opening portion and also to reduce evaporation of the planting water W through the top face opening portion 12 to the outside of he housing 11.

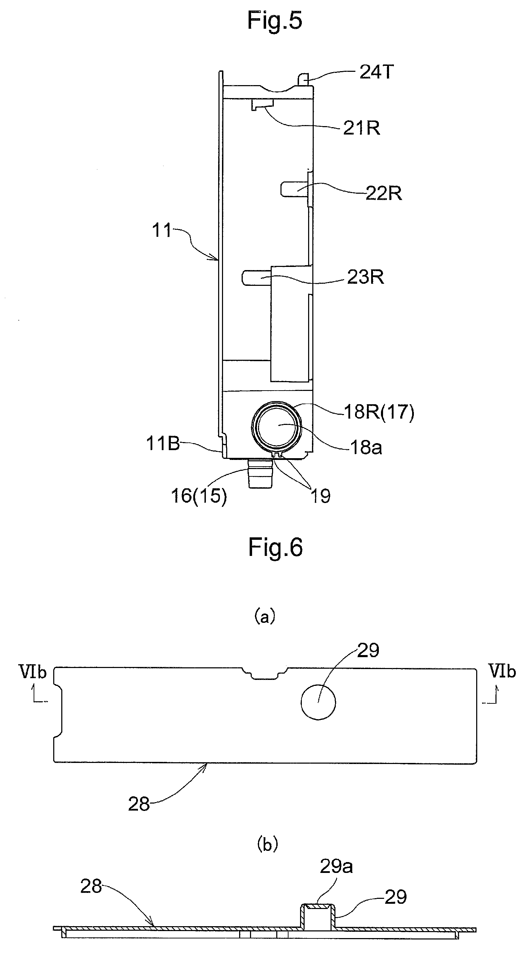

As shown in Fig. 6 (a) and Fig. 6 (b), the lid member 28 includes a water feeding mouth 29 projecting upwards and disposed slightly on the right side of the left/right center. When the lid member 28 is formed by injection molding of ABS resin, the water feeding mouth 29 will be formed integrally therewith. At the time of injection molding of the lid member 28, the water feeding mouth 29 will be formed under a closed state closed by a partition wall 29a. With post-fabrication removal of the partition wall 29a of the water feeding mouth 29 when there arises a need for its use, planting water W can be fed through the water feeding mouth 29 to the inside of the top face opening portion 12 of this planting unit 10. At the time of fabrication of the lid member 28, the water feeding mouth 29 will be kept closed with the partition wall 29a. And, then when needed for its use, the partition wall 29a of the water feeding mouth 29 will be removed by post-fabrication work. With this, it is possible to manufacture a large number of lid members 28 of a same configuration, whereby the manufacture cost can be reduced. Incidentally, the forming position of the partition wall 29a is not limited to the one shown in the drawing. Instead, this partition wall 29a can be provided at a position for closing the lower end of the water feeding mouth 29. Or, at the time of injection molding of the lid member 28, the water feeding mouth 29 can be opened for allowing water passage in advance and then when needed, the water feeding mouth 29 can be closed with post-fabrication work. Incidentally, the lid member 28 is not limited to the arrangement formed by injection molding of thermoplastic resin such as ABS resin, vinyl chloride, PET, acryl, etc., but can be formed by machining, welding etc. of a metal material such as aluminum, stainless steel, etc.

The planting bed material 30 is comprised of a water absorbent or retentive material capable of retaining water and air in good balance approximately uniformly from its upper part to its lower part, and capable of readily retaining an amount of air necessary for growth of plant root.

A preferred example of such water retentive material is one prepared by reacting at least a water-retentive filler material, water and urethane prepolymer and polyol having ratio ranging from 20 to 60 weight%. In the instant embodiment, the planting bed material 30 has through holes 31 at four positions as seen in a front view, so that block members having a truncated conical shape with plants 32 planted therein in advance will be fitted into the through holes 31. Incidentally, the plants 32 can be directly planted in the planting bed material 30.

The planting bed material 30 has a vertically elongate rectangular flat-plate like shape and is sized to be approximately equal to or slightly smaller than the mounting space S inside the housing 11, so that the material 30 will be inserted and accommodated in the mounting space S inside the housing 11 through the front face opening portion 13.

The front face opening portion 13 of the housing 11 is provided at a position upwardly displaced from the vertical center of the front face portion.

Further, the four through holes 31 formed through the approximately flat-plate like shaped planting bed material 30 in the front/rear direction for planting the block members planted in advance with the plants 32 are also disposed as a whole at positions upwardly displaced from the vertical center.

As a result, as shown in Fig. 1, the four through holes 31 arranged in the planting bed material 30 accommodated in the housing 11 and the block members planted in advance with the plants 32 and fitted into the holes are distributed generally equally within the front face opening portion 13 upwardly displaced as described above.

In the planting bed material 30, its lateral face portion is tapered from the front face portion to the rear face portion. Further, no through hole 31 is formed at the lower portion of the planting bed material 30 disposed downwardly of the lower edge of the front face opening portion 13, but left and right lateral face portions of this portion have corner-cutout shape as seen in the front view and the rear face portion of this portion is tapered with its width progressively decreasing toward the front side as viewed in a side view. This shape serves to secure a greater volume for the water reservoir portion T formed downwardly of the lower edge of the front face opening portion 13 and also to allow smooth passage of planting water W reserved.

The planting water W fed to the housing 11 will be reserved in the water reservoir portion T at a level not exceeding the upper end of the overflow pipe 16 and the planting bed material 30 whose portion is submerged in the reserved planting water W will suck up the planting water W and will retain an appropriate amount of planting water W therein eventually, so the plants 32 planted in the planting bed material 30 can be grown healthfully.

Next, the planter relating to the present invention will be explained.

As shown in Fig. 8 and Fig. 9, the planter 100 is formed by disposing the planting units 10 configured as above adjacently in three columns in the left-right direction as viewed in the front view and disposed adjacently also in one or two stages in the vertical direction. Also, to the circumference of the planter 100, the frame body 101 is fixed.

Next, interconnection between the plurality of planting units 10 together constituting the planter 100 will be explained.

For instance, when two planting units 10 are disposed adjacently in the left/right direction as seen in the front view, from a position where the axis of the pipe 18R of the left planting unit 10 and the axis of the pipe 18L of the right planting unit are in agreement and where the retaining portion 21R of the left planting unit 10 is located before the relating portion 21L of the right planting unit 10, the pipe 18L will be progressively inserted into the pipe 18R. Upon completion of the insertion between the pipe 18R and the pipe 18L, or in timed agreement with completion of the insertion, the left plating unit 10 will be rotated relative to the right planting unit 10 about the axes of the pipes 18R, 18L, to provide retention between the retaining portion 21R and the retaining portion 21L. Upon completion of the retention between the retaining portion 21R and the retaining portion 21L, the interconnecting portion 23R of the left planting unit 10 will come into abutment with the interconnecting portion 23L of the right planting unit 10, so the interconnecting portion 23R and the interconnecting portion 23L will be threaded to each other, thus completing interconnection between the planting units 10 disposed adjacently in the left/right direction. When three or more planting units 10 disposed adjacently in the left/right direction, the above-described interconnecting operation will be repeated. When the interconnection between the plurality of planting units 10 is to be released, a reverse operational procedure to the above will be effected. Incidentally, the pipes 18R, 18L of the planting units 10 interconnected will constitute the communication portion 17 allowing passage of planting water W, upon removal of the partition wall 18a.

Further, when two planting units 10 are to be disposed adjacently in the vertical direction, the stepped portion 11B of the bottom of the upper planting unit 10 will be placed to come into contact with the stepped portion 11T inside the top face opening portion 12 of the lower planting unit 10. When the interconnecting portion 24B of the upper planting unit 10 and the interconnecting portion 24T of the lower planting unit 10 are threaded to each other, interconnection between the planting units 10 disposed adjacently in the vertical direction is completed. When three or more planting units 10 are to be disposed adjacently in the vertical direction, the above-described interconnecting operation will be repeated in the vertical direction. When the interconnection between the plurality of planting units 10 is to be released, a reverse operational procedure to the above will be effected. Incidentally, the overflow pipe 16 of the upper planting unit 10 of the interconnected planting units 10 constitutes the water discharging portion 15 capable of discharging the planting water W, upon removal of the partition wall 16a.

Therefore, when the planter 100 as shown in Fig. 8 is to be formed, firstly, three planting units 10a, 10b, 10c will be interconnected in the left/right direction and similarly planting units 10d, 10e, 10f will be interconnected and as these are displaced adjacently in the vertical direction, so that the planting unit 10a and the planting unit 10d, the planting unit 10b and the planting unit 10e, and the planting unit 10c and the planting 10f, will be interconnected to each other, respectively.

With removal of the respective predetermined partition wall 18a, the pipe 18R of the planting unit 10a and the pipe 18L of the planting unit 10b function as the communication portion 17 for establishing communication between the respective water reservoir portions T; the pipe 18R of the planting unit 10d and the pipe 18L of the planting unit 10e function as the communication portion 17 for establishing communication between the respective water reservoir portions T; and the pipe 18R of the planting unit 10e and the pipe 18L of the planting unit 10f function as the communication portion 17 for establishing communication between the respective water reservoir portions T. Further, with removal of the respective predetermined partition wall 16a, the overflow pipe 16 of the planting unit 10a functions as the water discharging portion 15 for discharging excess planting water W of the water reservoir portion T of the planting unit 10a to the lower planting unit 10d; and the overflow pipe 16 of the planting unit 10f functions as the water discharging portion 15 for discharging excess planting water W from the planter 100.

When the planting water W is fed to the water feeding mouth 29 of the planting unit 10c via a water feeding pipe 102 provided in the frame body 101, this water will be reserved in the water reservoir portion T of this planting unit 10c via the water feeding portion 14 and the planting water W will be fed from the planting unit 10c to the planting unit 10b and to the planting unit 10a via the respective communication portions 17 and then via the water discharging portion 15 of the planting unit 10a to the plating unit 10d. The planting water W fed to the water reservoir portion T of the planting unit 10d will be fed to the planting unit 10e, the planting unit 10f via the respective communication portions 17 and eventually discharged via the water discharging portion 15 of the planting unit 10f to the outside of this planting unit 10f.

Excess planting water W discharged from the water discharging portion 15 of the planting unit 10f will be collected in a water reservoir tank (not shown) connected to this water discharging portion 15 and can be fed for recirculation by a pump to the water feeding mouth 29 of the planting unit 10c again.

With the planting unit 10 according to the present invention, by disposing a plurality of them adjacently, a planter 100 of a desired configuration can be provided much less costly than the conventional planter which would be designed individually. Further, any desired change of the configuration of the 100 after the fabrication thereof is possible for each individual planting unit 10.

Moreover, it is possible to freely set afterwards so as to be capable of feeding the planting water W from the outside or discharging the planting water W to the outside in either the vertical direction or the left/right direction, for each individual planting unit 10. Thus, when a plurality of units are combined to constitute a large planter 100, the planter 100 as a whole can be provided with a single water feeding portion 14 and a single water discharging portion 15. As the planting unit 10 constituting the planter 100 acts as the feeding means for feeding planting water W to the downstream planting unit 10, no hose or pipe needs to be provided separately for feeding the planting water W to the respective planting units 10. And, no change of the pump resulting from increase of pipe resistance due to size change of the planter 100 at least in the left/right direction will be needed.

Incidentally, with reference to Fig. 8 and Fig. 9, it was explained as a specific example that the six planting units 10 in total in three columns in the left/right direction and in two stages in the vertical direction are interconnected to form the generally rectangular-shaped planter 100. However, the arrangement of the planting units 10 is not limited thereto. For instance, by planting different plants 32 for the respective planting units 10 or for the respective through holes 31 of the planting bed materials 30 accommodated in the respective planting units 10, it is possible to provide a certain desired pattern as a whole such as a tile pattern or mosaic pattern, with use of the colors and/or the kinds of these plants, whereby the aesthetic aspect of the planting units 10 and the planter 100 can be improved.

Moreover, in the planter 100, the plurality of planting units 10 need not be disposed in the rectangular pattern as a whole. As the respective planting unit 10 allows passage of planting water W in the desired, either vertical or left/right direction as long as between the planting units 10 disposed adjacently in the vertical or left/right direction, with whatever arrangement of the planting units 10 to provide a certain pattern as a whole, the aesthetic aspect can be improved. The frame body 101 can be designed appropriately in correspondence therewith.

Regardless of the contemplated configuration of the planter 100, preferably, the planting water W is fed via the water feeding mouth 29 of the lid member 28 included in the uppermost planting unit 10 or a predetermined planting unit 10 in a group of planting units 10, and the planting water W is discharged from one of the planting units 10 of each stage, preferably, from a planting unit 10 most distant from the planting unit 10 receiving the feeding of the planting water W from the upper planting unit 10 to a lower planting unit 10. And, this process is repeated until the lowermost planting unit 10 or the group of planting units 10. And, discharging of the planting water W is effected through the water discharging portion 15 of the lowermost planting unit 10 or a predetermined planting unit 10 of a group of planting units 10. With this, there is no need for install a water feeding pipe and a water discharging pipe for each planting unit 10, so that a planter 100 having a desired configuration can be realized at low costs.

The above described embodiments are only explanatory of the present invention. The present invention is not limited to the description thereof, but various modifications are possible in the respective constituents thereof within a range capable of achieving the function and effect of the present invention.

### Description of Reference Marks/Numerals

- 10:: planting unit
- 11:: housing
- 12:: top face opening portion
- 13:: front face opening portion
- 14:: water feeding portion
- 15:: water discharging portion
- 16:: overflow pipe
- 16a:: partition wall
- 17:: communication portion
- 18L, 18R:: pipe
- 18a:: partition wall
- 19:: rib
- 20:: water level window
- 21L, 21R:: retaining portion
- 22L, 22R:: fixing portion
- 23L, 23R:: interconnecting portion
- 24T, 24B: interconnecting portion
- 25:: fixing portion
- 26:: retaining hole
- 28:: lid member
- 29:: water feeding mouth
- 29a:: partition wall
- 30:: planting bed material
- 31:: through hole
- 32:: plant
- 100:: planter
- 101:: frame body
- S:: mounting space
- T:: water reservoir portion
- W:: planting water

## Claims

1. A planting unit comprising a housing having a mounting space for placing a planting bed material therein and a water reservoir portion capable of reserving planting water for the planting bed material mounted in the mounting space, and a front opening portion allowing exposure therethrough of the planting bed material mounted in the mounting space;
wherein at an upper portion of the housing, a water feeding portion capable of feeding water to the reservoir portion can be formed;
at a lower portion of the housing, a water discharging portion capable of discharging the water in the water reservoir portion can be formed; and
on each of left and right side portions of the housing, there can be formed a communication portion allowing communication between the water reservoir portion of this planting unit and a water reservoir portion of another planting unit disposed on left or right adjacent side of the planting unit as viewed in a front view.

2. The planting unit according to claim 1, wherein:
the communication portion respectively has a base end side connected to a lateral face portion of the housing and also has a pipe joint on the other end side, the communication portion being comprised of a pair of pipes whose axes are disposed along a horizontal direction and at a same height; and
the pipe joint is connectable to another pipe joint provided in the communication portion of the other planting unit disposed adjacent on the left or right side.

3. The planting unit according to claim 2, wherein a water guiding portion is formed in at least one of the pair of pipes.

4. The planting unit according to claim 3, wherein:
the water guiding portion includes a rib provided at a lower portion of an outer circumference of the pipe, the rib being raised and extending along the axis from the other end side to the base end side; and
the rib has, a lower end portion thereof, an inclined portion inclined downward from the other end side to the base end side.

5. The planting unit according to any one of claims 1-4, wherein the housing has a top face opening portion in a top face thereof, the top face opening portion constituting the water feeding portion.

6. The planting unit according to claim 5, wherein the top face opening portion is capable of accommodating and mounting a lower end portion of another planting unit disposed adjacently upward.

7. The planting unit according to claim 5 or 6, wherein the top end opening portion can be covered by a lid member having a water feeding mouth capable of feeding water to the water feeding portion.

8. The planting unit according to any one of claims 1-7, wherein:
the water discharging portion comprises an overflow pipe capable of discharging water by allowing overflow of planting water over a predetermined discharge water level; and
the predetermined discharge water level is set near a maximum height of the communication portion.

9. The planting unit according to any one of claims 1-8, wherein in the housing, at least the water discharging portion and the communication portion are formed integrally, and the water discharging portion and the communication portion are formed under a closed state not permitting passage of the planting water.

10. The planting unit according to any one of claims 1-9, wherein the housing includes, downwardly of the opening portion, a water level window allowing visual recognition of a water level of the planting water reserved in the water reservoir portion.

11. The planting unit according to any one of claims 1-10, wherein the housing includes an interconnecting portion for interconnecting the planter unit and another planter unit disposed on left or right adjacent side of the planting unit as viewed in a front view.

12. A planter including a plurality of the planter units having any one of claims 1-11 disposed adjacently in a left/right direction and also adjacently in one or more stages in a vertical direction, as viewed in a front view;
wherein of the planting units disposed in each stage, planting water is fed from the water feeding portion of a predetermined planting unit to the water reservoir portion of this planting unit;
the respective planting units disposed in the respective stage share planting water via the mutually communicated communication portion of the other planting units disposed adjacently respectively; and
the planting water is discharged through the water discharging portion from the water reservoir portion of a predetermined planting unit of a group of planting units disposed in the each stage.
